# EUROPEAN PATENT APPLICATION

(11) **EP 3 668 179 A1**
(43) Date of publication of application: **17.06.2020**
(21) Application number: 19210694.6
(22) Date of filing: 19.06.2007
(51) Int. Cl.: H04W 36/00, H04W 56/00

(54) **CONTENT OF THE HANDOVER COMMAND IN AN INTRA-LTE HANDOVER**

(30) Priority: 20.06.2006 US 81502306 P
(62) Divisional of application: 18157176.1
(71) Applicant: InterDigital Technology Corporation, Wilmington, DE 19809 (US)
(72) Inventor: WANG, Jin, Princeton, NY New York 08540 (US); CHANDRA, Arty, Manhasset Hills, NY 11040 (US); TERRY, Stephen E., Northport, NY New York 11768 (US)
(74) Representative: AWA Denmark A/S

(57) **Abstract**

A method and system for performing handover in a third generation (3G) long term evolution (LTE) system are disclosed. A source evolved Node-B (eNode-B) makes a handover decision based on measurements and sends a handover request to a target eNode-B. The target eNode-B sends a handover response to the source eNode-B indicating that a handover should commence. The source eNode-B then sends a handover command to a wireless transmit/receive unit (WTRU). The handover command includes at least one of reconfiguration information, information regarding timing adjustment, relative timing difference between the source eNode-B and the target eNode-B, information regarding an initial scheduling procedure at the target eNode-B, and measurement information for the target eNode-B. The WTRU then accesses the target eNode-B and exchanges layer 1/2 signaling to perform downlink synchronization, timing adjustment, and uplink and downlink resource assignment based on information included in the handover command.

## Description

### FIELD OF THE INVENTION

The present invention is related to wireless communication systems. More particularly, the present invention is related to a method and system for performing handover in a long term evolution (LTE) system.

### BACKGROUND

LTE for the fourth generation (4G) system is now being considered to develop a new radio interface and radio network architecture that provides a high data rate, low latency, packet optimization, and improved system capacity and coverage. For an LTE system, instead of using code division multiple access (CDMA), which is currently being used in a 3G system, orthogonal frequency division multiple access (OFDMA) and frequency division multiple access (FDMA) are proposed to be used in downlink and uplink transmissions, respectively. By changing in many aspects in the LTE system, intra-LTE handover procedures and related operations need to be re-considered.

The user equipment (UE) mobility management in an LTE_ACTIVE mode handles all necessary steps for seamless handover in the LTE system, such as making an intra-LTE handover decision on a source network side, (i.e., control and evaluation of UE and evolved Node-B (eNode-B) measurements taking into account UE-specific area restrictions), preparing radio resources on a target network side, commanding the UE to interface with new radio resources, releasing radio resources on the source network side, and the like. The UE mobility management mechanism also handles the transfer of context data between involved nodes, and the update of node relations on a control plane (C-plane) and a user plane (U-plane).

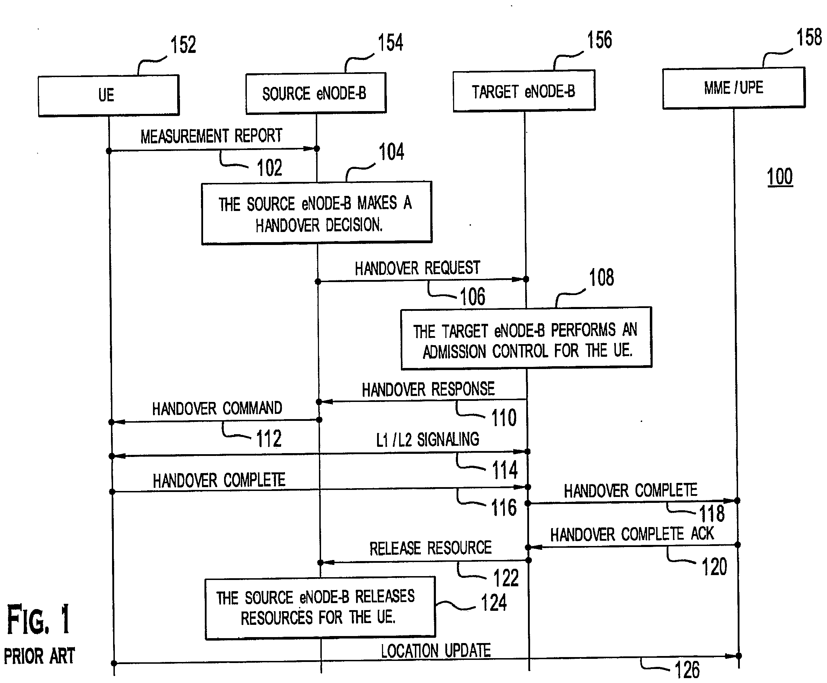

Figure 1 is a signaling diagram of a handover process 100 currently proposed for the LTE system. A UE 152 and a source eNode-B 154 perform measurements and exchange measurement reports (step 102). The source eNode-B 154 makes a handover decision based on the measurement reports (step 104). The source eNode-B 154 then sends a handover request to a target eNode-B 156 (step 106). The handover decision and subsequent procedures before handover completion are performed without involving a mobility management entity/user plane entity (MME/UPE) 158, (i.e., handover preparation messages are directly exchanged between the source eNode-B 154 and the target eNode-B 156).

The target eNode-B 156 performs an admission control for the UE 152 (step 108). If the target eNode-B 156 can accept the UE 152, the target eNode-B 156 sends a handover response to the source eNode-B 154 (step 110). The source eNode-B 154 sends a handover command to the UE 152 (step 112). For seamless handover, a U-plane tunnel is established between the source eNode-B 154 and the target eNode-B 156.

The UE 152 and the target eNode-B 156 then exchange layer 1 and 2 (L1/L2) signaling (step 114). During handover execution, user data may be forwarded from the source eNode-B 154 to the target eNode-B 156. The forwarding may take place in a service dependent and implementation specific way. Forwarding of user data from the source eNode-B 154 to the target eNode-B 156 should take place as long as packets are received at the source eNode-B 154 from the UPE 158.

After a connection to the target eNode-B 156 is established, the UE 152 sends a handover complete message to the target eNode-B 156 (step 116). The target eNode-B 156 sends a handover complete message to the MME/UPE 158 (step 118). The MME/UPE 158 then sends a handover complete acknowledgement (ACK) to the target eNode-B 156 (step 120). After the MME/UPE 158 is informed by the target eNode-B 156 that the UE 152 has gained an access at the target eNode-B 156 by the handover complete message, the U-plane path is switched by the MME/UPE 158 from the source eNode-B 154 to the target eNode-B 156.

The release of the radio resources at the source eNode-B 154 is triggered by a release resource message sent by the target eNode-B 156 (step 122). After receiving the release resource message from the target eNode-B 156, the source eNode-B 154 releases the radio resources for the UE 152 (step 124). The UE 152 performs a location update with the MME/UPE 158 (step 126).

The above intra-LTE handover procedure 100 does not provide details regarding the handover command, (such as configurations of the UE 152 based on the target eNode-B's requirement), and details regarding UE operation after the UE receives the handover command, (such as data transmission between the source eNode-B 154 and the UE 152 and radio link control (RLC) and hybrid automatic repeat request (HARQ) reset and packet data convergence protocol (PDCP) sequence number (SN) gap identification by the UE 152). The above intra-LTE handover procedure 100 also does not provide details regarding UE timing adjustment for synchronous and asynchronous eNode-Bs and details for efficient target eNode-B scheduling of resources for UE transmission.

### SUMMARY

The present invention is related to a method and system for performing handover in an LTE system. A source eNode-B makes a handover decision based on measurements, and sends a handover request to a target eNode-B. The target eNode-B sends a handover response to the source eNode-B indicating that a handover should commence. The source eNode-B then sends a handover command to a wireless transmit/receive unit (WTRU). The handover command includes at least one of reconfiguration information, information regarding timing adjustment, relative timing difference between the source eNode-B and the target eNode-B, information regarding an initial scheduling process at the target eNode-B, and measurement information for the target eNode-B. The WTRU then accesses the target eNode-B and exchanges layer 1/2 signaling to perform downlink synchronization, timing adjustment, and uplink and downlink resource assignment based on information included in the handover command.

### BRIEF DESCRIPTION OF THE DRAWINGS

A more detailed understanding of the invention may be had from the following description of a preferred embodiment, given by way of example and to be understood in conjunction with the accompanying drawings wherein:
Figure 1 is a signaling diagram of a handover process currently proposed for the LTE system; and
Figure 2 is a signaling diagram of an intra-LTE handover process in accordance with the present invention.

### DETAILED DESCRIPTION OF THE PREFERRED EMBODIMENTS

When referred to hereafter, the terminology "WTRU" includes but is not limited to a UE, a mobile station, a fixed or mobile subscriber unit, a pager, a cellular telephone, a personal digital assistant (PDA), a computer, or any other type of user device capable of operating in a wireless environment. When referred to hereafter, the terminology "eNode-B" includes but is not limited to a base station, Node-B, a site controller, an access point (AP), or any other type of interfacing device capable of operating in a wireless environment.

The present invention provides detailed procedures for signaling and operations at a WTRU and source and target eNode-Bs during intra-LTE handover both for successful handover and handover failure cases. In a successful handover case, new information elements (IEs) are added in both the handover command message and the handover complete message. In a handover failure case, new signaling messages are exchanged between a source eNode-B and a target eNode-B.

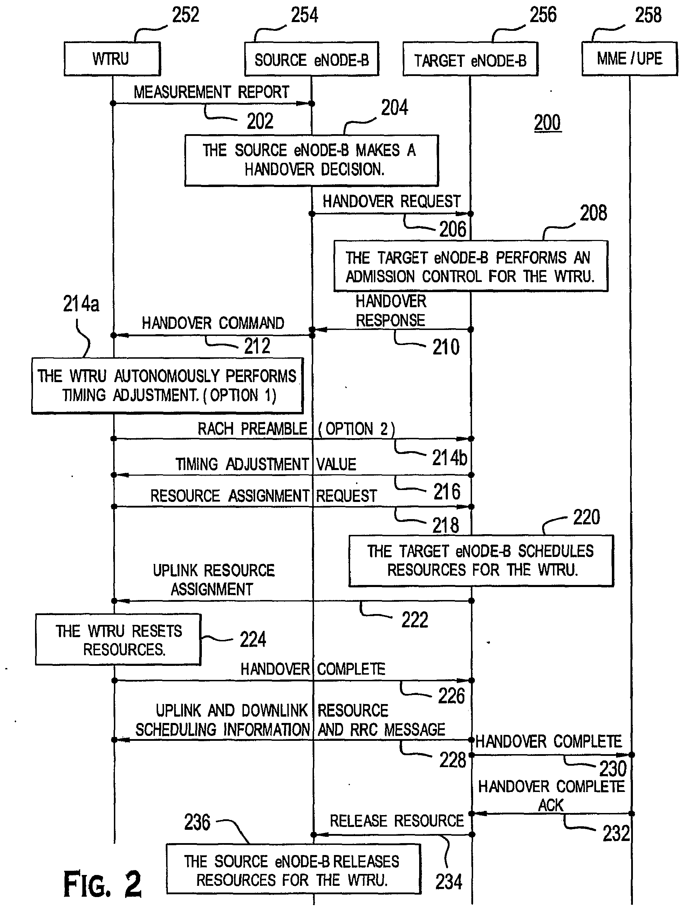

Figure 2 is a signaling diagram of an intra-LTE handover process 200 in accordance with the present invention. A WTRU 252 and a source eNode-B 254 each perform at least one measurement, and the WTRU 252 sends a measurement report to the source eNode-B 254 (step 202). The source eNode-B 254 makes a handover decision based on the measurement report and the result of its own measurement (step 204). The source eNode-B 254 then sends a handover request to a target eNode-B 256 (step 206). The target eNode-B 256 performs an admission control for the WTRU 252 (step 208). If the target eNode-B 256 can accept the WTRU 252, the target eNode-B 256 sends a handover response to the source eNode-B 254 indicating that a handover should commence (step 210). The source eNode-B 254 then sends a handover command to the WTRU 252 (step 212).

The handover command should include at least one of reconfiguration information for radio resource control (RRC), radio link control (RLC), medium access control (MAC) and physical (PHY) layer, information regarding timing adjustment when handing over from the source eNode-B 254 to the target eNode-B 256, (i.e., whether the WTRU 252 should perform timing adjustment autonomously or using a random access channel (RACH) procedure, if a RACH is to be used, whether random or dedicated access signature will be used, or the like), relative timing difference between eNode-Bs (or cells) for autonomous timing adjustment, information regarding initial radio resource scheduling procedure at the target eNode-B 256, measurement information for the target eNode-B 256, and the like. The information regarding the initial scheduling procedure at the target eNode-B 256 indicates whether a RACH access procedure should be used for a resource assignment request or the target eNode-B 256 may schedule resources for the WTRU 252 without receiving an explicit resource assignment request from the WTRU 252. Alternatively, the measurement and other configuration information may be sent to the WTRU 252 by the target eNode-B 256 after receiving a handover complete message from the WTRU 252 at step 226.

For a seamless handover, a U-plane tunnel is established between the source eNode-B 254 and the target eNode-B 256. After sending the handover command, the source eNode-B 254 may forward the user data to the target eNode-B 256. The forwarding may take place in a service dependent and implementation specific way.

After receiving the handover command from the source eNode-B 254, the WTRU 252 may continue to transmit and receive data to and from the source eNode-B 254. The data transmission process depends on whether synchronized handover or non-synchronized handover is used.

When a synchronized handover procedure is used, (i.e., the source eNode-B 254 and the target eNode-B 256 are synchronized or the relative timing difference is known to the WTRU 252), the source eNode-B 254 and the WTRU 252 may continue to transmit and receive data after receiving the handover command until a certain handover time (t_{HO}) which is signaled via the handover command. The transmitted data after receiving the handover command is preferably limited to incomplete service data units (SDUs), (i.e., RLC protocol data unit (PDU)), transmitted before the handover command was sent. An RLC control message is sent to the WTRU 252 to indicate a sequence number (SN) of a successfully received SDU(s) and an SDU gap. The SN may be a PDCP SN, or other types of SN. An SN common to the successfully received SDU(s) and unsuccessfully received SDU(s) may be included in the RLC control message.

When a non-synchronized handover procedure is used, (i.e., the source eNode-B 254 and the target eNode-B 256 are not synchronized or the relative timing difference is not known to the WTRU 252), the source eNode-B 254 stops transmission as soon as the source eNode-B 254 sends the handover command to the WTRU 252. The WTRU 252 also stops transmission of the data packets to the source eNode-B 254 as soon as the WTRU 252 receives the handover command. Alternatively, the source eNode-B 254 may continue transmission of data packets until the WTRU 252 switches to the target eNode-B 254.

After receiving the handover command, the WTRU 252 accesses the target eNode-B 256 and exchange layer 1/2 (L1/L2) signaling with the target eNode-B 256 to perform downlink synchronization, timing adjustment, (i.e., uplink synchronization), and uplink and downlink resource assignment based on information included in the handover command.

For timing adjustment, (i.e., uplink synchronization), the WTRU 252 implements one of two options. Preferably, the network decides which option to be used.

In accordance with a first option, the WTRU 252 autonomously performs the timing adjustment based on relative timing difference between the source eNode-B 254 (or cell) and the target eNode-B 256 (or cells) (step 214a). The relative timing difference information is preferably included in the handover command.

In accordance with a second option, a conventional RACH access procedure is used for the timing adjustment (step 214b). The WTRU sends a RACH preamble to the target eNode-B and the target eNode-B calculates timing offset based on the transmitted RACH preamble and sends the timing offset information to the WTRU for uplink synchronization.

A plurality of RACH preamble signatures with different orthogonality and different priority may be used, and among the plurality of RACH preamble signatures, a RACH preamble signature with higher orthogonality, higher priority and/or higher power may be used for the handover purpose.

A particular (dedicated) RACH preamble signature may be reserved for the handover purpose to indicate that the sender is a handover WTRU, (i.e., a WTRU undergoing a handover process). This dedicated RACH preamble signature is indicated in the handover command. After receiving the reserved RACH preamble signature, the target eNode-B 256 recognizes that the sender is a handover WTRU and may provide a priority to the handover WTRU. This can avoid the random access process which causes a long interruption time during handover. Alternatively, a RACH message following the RACH preamble may explicitly indicate that the sender is a handover WTRU. A handover WTRU is preferably given a higher priority to access an eNode-B (cell) than a non-handover WTRU due to state transition. The RACH procedure using the reserved RACH preamble signature may be used in either synchronized or non-synchronized eNode-B (or cell) handover. A physical radio resource allocation for sending the reserved RACH preamble signature to the target eNode-B 256 may also be included in the handover command to reduce a delay for the random access.

The random access procedure may be used for different purposes. The random access procedure may be used to initiate communication between a WTRU and a network which requires a state transit from an LTE_idle state to an LTE_active state. The random access procedure may be used for timing adjustment during handover and then for an access request to the new cell. When the random access procedure is used during handover, the delay caused by the random access procedure should be minimized. Therefore, there should be differences, (e.g., giving a priority to a handover WTRU), between the random access to the target eNode-B (cell) during handover and the random access to the source eNode-B (cell) in a non-handover situation because of state transition from an LTE-Idle state to an LTE-Active state in the non-handover case.

After receiving the RACH preamble signature from the WTRU, the target eNode B estimates the timing adjustment value and sends this value back to the WTRU (step 216).

After performing timing adjustment, (either autonomously or via a RACH preamble transmission), the WTRU 202 may send a radio resource assignment request to the target eNode-B 256 (step 218). The request is preferably sent via a RACH message following the RACH preamble. The target eNode-B 256 then schedules downlink and uplink resources for the WTRU 252 (step 220). Alternatively, the target eNode-B 256 may schedule resources for the WTRU 252 without receiving an explicit request from the WTRU 252. The resource scheduling may take place any time after the target eNode-B 256 admits the WTRU at step 208. For example, for the synchronized handover procedure, the target eNode-B 256 may schedule the uplink and downlink resources after some pre-defined time (earlier than the expected time for eNode-B switching).

The target eNode-B 256 sends an uplink resource assignment to the WTRU 252 (step 222). This uplink resource is used for sending a handover complete message at step 226, not for data transmission. The WTRU 252 preferably resets RLC and HARQ parameters after receiving the uplink resource assignment from the target eNode-B 256 (step 224). Alternatively, the WTRU 252 may reset the RLC and HARQ parameters after receiving and processing the handover command at step 212. These parameters related to transmission to the target eNode-B 256 (or cell) are included in the handover command.

The WTRU 252 sends a handover complete message to the target eNode-B 256 (step 226). The WTRU 252 preferably includes a starting uplink PDCP SN to be transmitted in the handover complete message. Optionally, the WTRU 252 may send an RLC control message to the target eNode-B 256 after the handover complete message to indicate the successfully transmitted SDUs and an SDU gap.

The target eNode-B 256 sends uplink and downlink resource scheduling information for data transmission and an RRC message to the WTRU (step 228). The RRC message includes at least one of radio access bearer (RAB) reconfiguration information, a starting PDCP SN in the downlink, an RLC control message, and measurement related information. Some or all of the above information may optionally be sent as part of the handover command or the first packet from the target eNode-B 256.

The target eNode-B 256 sends a handover complete message to the MME/UPE 258 to inform that the WTRU 252 has gained an access at the target eNode-B 256 (step 230). The MME/UPE 258 then sends a handover complete acknowledgement (ACK) to the target eNode-B 256 and switches the U-plane data path from the source eNode-B 254 to the target eNode-B 256 (step 232). A release of the radio resources at the source eNode-B 254 is triggered by a release resource message sent by the target eNode-B 256 (step 234). After receiving the message from the target eNode-B 256, the source eNode-B 254 releases the radio resources for the WTRU 252 (step 236).

A handover failure case is explained hereinafter by referring to Figure 2. When the WTRU 252 is not able to handover successfully, the WTRU 252 may resort to a radio link (RL) failure or a cell reselection procedure. If the handover command fails at step 212, the source eNode-B 254 informs the target eNode-B 256 of such a failure. The target eNode-B 256 schedules any uplink and downlink resources to the WTRU 252 after step 208. When performing cell reselection in a handover failure case, the WTRU 252 may first try to access the originally connected cell within the source eNode-B 254. If this fails, the WTRU 252 may try to access other cells within the source eNode-B. If this also fails, then the WTRU 252 may try to access to other cells not included in the source eNode-B based on the measurement result.

The source eNode-B 254 maintains a timer to time out if the handover complete message is not received after a predetermined time after the handover command failure. The source eNode-B 254 may reset RRC context, PDCP context, RLC and HARQ parameters related to the WTRU 252 if the handover failure timer expires. The source eNode-B then releases the radio resources for the WTRU 252.

When cell reselection is performed by the WTRU 252, the source cell or eNode-B identity (ID) is sent by the WTRU 252 to any eNode-B as part of the LTE-radio network temporary identity (RNTI) information for the detection if the WTRU 252 accesses the original cell or any other cells. At the source eNode-B, the source eNode-B's MAC layer informs its RRC layer of the handover failure if the MAC layer detects failed transmission of handover command.

### Embodiments.

1. A method for performing handover in a wireless communication system.
2. The method of embodiment 1 comprising a WTRU and a source eNode-B performing measurements.
3. The method of embodiment 2 comprising the source eNode-B making a handover decision based on the measurements.
4. The method of embodiment 3 comprising the source eNode-B sending a handover request to a target eNode-B.
5. The method of embodiment 4 comprising the target eNode-B sending a handover response to the source eNode-B indicating that a handover should commence.
6. The method of embodiment 5 comprising the source eNode-B sending a handover command to the WTRU, the handover command including at least one of reconfiguration information, information regarding timing adjustment, relative timing difference between the source eNode-B and the target eNode-B; information regarding an initial radio resource scheduling procedure at the target eNode-B, and measurement information for the target eNode-B.
7. The method of embodiment 6 wherein the reconfiguration information is for at least one of an RRC layer, an RLC layer, a MAC layer and a physical layer.
8. The method as in any one of embodiments 6-7, wherein the handover command indicates that the target eNode-B schedules resource for the WTRU based on a RACH access procedure.
9. The method as in any one of embodiments 6-8, wherein the handover command indicates that the target eNode-B schedules resource for the WTRU without receiving an explicit resource assignment request from the WTRU.
10. The method as in any one of embodiments 6-9, further comprising the source eNode-B forwarding user data to the target eNode-B.
11. The method of embodiment 10 wherein the forwarding of the user data is performed in a service dependent and implementation specific way.
12. The method as in any one of embodiments 6-9, wherein the WTRU and the source eNode-B continue to transmit and receive data after the WTRU receives the handover command.
13. The method of embodiment 12 wherein the WTRU and the source eNode-B continue to transmit and receive the data until a handover time that is signaled via the handover command.
14. The method as in any one of embodiments 12-13, wherein the data transmitted is an incomplete SDU.
15. The method of embodiment 14 wherein the source eNode-B sends an RLC message to the WTRU including an SN to indicate a successfully received SDU and an unsuccessfully received SDU.
16. The method of embodiment 15 wherein the SN is a PDCP SN or a common SN.
17. The method as in any one of embodiments 6-9, wherein the source eNode-B stops transmission of data to the WTRU as soon as the source eNode-B sends the handover command to the WTRU, and the WTRU stops transmission of data to the source eNode-B as soon as the WTRU receives the handover command.
18. The method as in any one of embodiments 6-9, wherein the source eNode-B continues transmission of data until the WTRU switches to the target eNode-B.
19. The method as in any one of embodiments 6-18, further comprising the WTRU performing timing adjustment with the target eNode-B.
20. The method of embodiment 19 wherein the WTRU autonomously performs the timing adjustment based on relative timing difference between the source eNode-B and the target eNode-B.
21. The method as in any one of embodiments 19-20, wherein the relative timing difference information is included in the handover command.
22. The method as in any one of embodiments 19-21, wherein the WTRU uses a RACH access procedure for the timing adjustment.
23. The method of embodiment 22 wherein a plurality of RACH preamble signatures with different orthogonality and different priority are used, and among the plurality of RACH preamble signatures, a RACH preamble signature with higher orthogonality, higher priority and higher power is used for handover purpose.
24. The method of embodiment 23 wherein a particular RACH preamble signature is reserved for the handover purpose.
25. The method of embodiment 24 wherein the reserved RACH preamble signature is indicated in the handover command.
26. The method as in any one of embodiments 6-25, further comprising the target eNode-B assigning an uplink resource for transmission of a handover complete message for the WTRU.
27. The method of embodiment 26 wherein the target eNode-B schedules the uplink resource based on a resource assignment request from the WTRU.
28. The method of embodiment 27 wherein the resource assignment request is sent via a RACH.
29. The method of embodiment 26 wherein the target eNode-B schedules the uplink resource without receiving a request from the WTRU.
30. The method of as in any one of embodiments 6-29, further comprising the WTRU resetting RLC arid HARQ after receiving the uplink resource from the target eNode-B.
31. The method as in any one of embodiments 6-29, further comprising the WTRU resetting RLC and HARQ after receiving the handover command.
32. The method as in any one of embodiments 6-31, further comprising the WTRU sending a handover complete message to the target eNode-B, the handover complete message including an uplink PDCP SN to be transmitted.
33. The method of embodiment 32 further comprising the WTRU sending an RLC control message to the target eNode-B after the handover complete message to indicate a successfully transmitted SDU and an SDU gap.
34. The method as in any one of embodiments 6-33, further comprising the target eNode-B sending uplink and downlink scheduling information for data transmission and RRC message to the WTRU, the RRC message including at least one of RAB reconfiguration information, a starting PDCP SN start in a downlink, an RLC control message, and measurement related information.
35. The method as in any one of embodiments 6-34, further comprising the WTRU performing an RL failure procedure when the handover command is not successfully delivered.
36. The method as in any one of embodiments 6-35, wherein the source eNode-B maintains a timer to time out if a handover complete message is not received until a predetermined time after the handover command is not successfully delivered.
37. The method of embodiment 36 wherein the source eNode-B resets RRC context, PDCP context, RLC and HARQ parameters related to the WTRU if the timer expires.
38. The method as in any one of embodiments 6-37, further comprising the WTRU performing a cell reselection procedure when the handover command is not successfully delivered.
39. The method of embodiment 38 wherein the WTRU first tries to access an originally connected cell in the source eNode-B.
40. The method of embodiment 39 wherein the WTRU tries to access another cell in the source eNode-B if the WTRU fails to access the originally connected cell.
41. The method of embodiment 40 wherein the WTRU tries to access another cell not included in the source eNode-B if the WTRU fails to access said another cell in the source eNode-B.
42. The method as in any one of embodiments 38-41, wherein the WTRU sends a source eNode-B ID to the target eNode-B during cell reselection.
43. A wireless communication system for performing handover.
44. The system of embodiment 43 comprising a WTRU configured to perform measurement and send a measurement repot.
45. The system of embodiment 44 comprising a target eNode-B.
46. The system of embodiment 45 comprising a source eNode-B configured make a handover decision based on the measurement report, send a handover request to the target eNode-B, and send a handover command to the WTRU after receiving a handover response from the target eNode-B indicating that a handover should commence, wherein the handover command includes at least one of reconfiguration information, information regarding timing adjustment, relative timing difference between the source eNode-B and the target eNode-B; information regarding an initial radio resource scheduling procedure at the target eNode-B, and measurement information for the target eNode-B.
47. The system of embodiment 46 wherein the reconfiguration information is for at least one of an RRC layer, an RLC layer, a MAC layer and a physical layer.
48. The system as in any one of embodiments 46-47, wherein the handover command indicates that the target eNode-B schedules resource for the WTRU using a RACH access procedure.
49. The system as in any one of embodiments 46-48, wherein the handover command indicates that the target eNode-B schedules resource for the WTRU without receiving an explicit resource assignment request from the WTRU.
50. The system as in any one of embodiments 46-49, wherein the source eNode-B is configured to forward user data to the target eNode-B after sending the handover command to the WTRU.
51. The system of embodiment 50 wherein the forwarding of the user data is performed in a service dependent and implementation specific way.
52. The system as in any one of embodiments 46-51, wherein the WTRU and the source eNode-B continue to transmit and receive data after the WTRU receives the handover command.
53. The system as in any one of embodiments 46-51, wherein the WTRU and the source eNode-B continue to transmit and receive the data until a handover time that is signaled via the handover command.
54. The system as in any one of embodiments 52-53, wherein the data transmitted is an incomplete SDU.
55. The system of embodiment 54 wherein the source eNode-B sends an RLC message to the WTRU including an SN to indicate a successfully received SDU and an unsuccessfully received SDU.
56. The system of embodiment 55 wherein the SN is a PDCP SN or a common SN.
57. The system as in any one of embodiments 46-51, wherein the source eNode-B stops transmission of data to the WTRU as soon as the source eNode-B sends the handover command to the WTRU, and the WTRU stops transmission of data to the source eNode-B as soon as the WTRU receives the handover command.
58. The system as in any one of embodiments 46-51, wherein the source eNode-B continues transmission of data until the WTRU switches to the target eNode-B.
59. The system as in any one of embodiments 46-58, wherein the WTRU is configured to perform timing adjustment with the target eNode-B.
60. The system of embodiment 59 wherein the WTRU is configured to autonomously perform the timing adjustment based on relative timing difference between the source eNode-B and the target eNode-B.
61. The system of embodiment 60 wherein the relative timing difference information is included in the handover command.
62. The system as in any one of embodiments 59-61, wherein the WTRU is configured to use a RACH access procedure for the timing adjustment.
63. The system of embodiment 62 wherein plurality of RACH preamble signatures with different orthogonality and different priority are used, and among the plurality of RACH preamble signatures, a RACH preamble signature with higher orthogonality, higher priority and higher power is used for handover purpose.
64. The system of embodiment 63 wherein a particular RACH preamble signature is reserved for the handover purpose.
65. The system of embodiment 64 wherein the reserved RACH preamble signature is indicated in the handover command.
66. The system as in any one of embodiments 46-65, wherein the target eNode-B is configured to assign an uplink resource for transmission of a handover complete message for the WTRU.
67. The system of embodiment 66 wherein the target eNode-B is configured to schedule the uplink resource based on a resource assignment request from the WTRU.
68. The system of embodiment 67 wherein the resource assignment request is sent via a RACH.
69. The system of embodiment 66 wherein the target eNode-B is configured to schedule the uplink resource without receiving a request from the WTRU.
70. The system as in any one of embodiments 66-69, wherein the WTRU is configured to reset RLC and HARQ after receiving the uplink resource from the target eNode-B.
71. The system as in any one of embodiments 46-70, wherein the WTRU is configured to reset RLC and HARQ after receiving the handover command.
72. The system as in any one of embodiments 46-71, wherein the WTRU is configured to send a handover complete message to the target eNode-B, the handover complete message including an uplink PDCP SN to be transmitted.
73. The system of embodiment 72 wherein the WTRU is configured to send an RLC control message to the target eNode-B after the handover complete message to indicate a successfully transmitted SDU and an SDU gap.
74. The system as in any one of embodiments 46-73, wherein the target eNode-B is configured to send uplink and downlink scheduling information for data transmission and RRC message to the WTRU, the RRC message including at least one of RAB reconfiguration information, a starting PDCP SN start in a downlink, an RLC control message, and measurement related information.
75. The system as in any one of embodiments 46-74, wherein the WTRU is configured to perform an RL failure procedure when the handover command is not successfully delivered.
76. The system as in any one of embodiments 46-75, wherein the source eNode-B includes a timer to time out if a handover complete message is not received until a predetermined time after the handover command is not successfully delivered.
77. The system of embodiment 76 wherein the source eNode-B resets RRC context, PDCP context, RLC and HARQ parameters related to the WTRU if the timer expires.
78. The system as in any one of embodiments 46-77, wherein the WTRU is configured to perform a cell reselection procedure when the handover command is not successfully delivered.
79. The system of embodiment 78 wherein the WTRU first tries to access an originally connected cell in the source eNode-B.
80. The system of embodiment 79 wherein the WTRU tries to access another cell in the source eNode-B if the WTRU fails to access the originally connected cell.
81. The system of embodiment 80 wherein the WTRU tries to access another cell not included in the source eNode-B if the WTRU fails to access said another cell in the source eNode-B.
82. The system as in any one of embodiments 78-81, wherein the WTRU is configured to send a source eNode-B ID to the target eNode-B during cell reselection.
83. An eNode-B for performing handover in a wireless communication system.
84. The eNode-B of embodiment 83 comprising a transceiver for transmitting and receiving data to and from a WTRU.
85. The eNode-B of embodiment 84 comprising a measurement unit for performing measurements on a channel for the WTRU.
86. The eNode-B as in any one of embodiments 84-85, comprising a handover controller configured to make a handover decision based on the measurements and send a handover command to the WTRU, the handover command including at least one of reconfiguration information, information regarding timing adjustment, relative timing difference between a source eNode-B and a target eNode-B; information regarding an initial radio resource scheduling procedure at the target eNode-B, and measurement information for the target eNode-B.
87. The eNode-B of embodiment 86 wherein the reconfiguration information is for at least one of an RRC layer, an RLC layer, a MAC layer and a physical layer.
88. The eNode-B as in any one of embodiments 86-87, wherein the handover controller controls the transceiver such that data is transmitted and received to and from the WTRU after the WTRU receives the handover command.
89. The eNode-B as in any one of embodiments 86-87, wherein the handover controller controls the transceiver such that data is transmitted and received to and from the WTRU until a handover time that is signaled via the handover command.
90. The eNode-B of embodiment 89 wherein the data transmitted is an incomplete SDU.
91. The eNode-B as in any one of embodiments 86-87, wherein the handover controller controls the transceiver such that data transmission is stopped as soon as the handover command is sent to the WTRU.
92. A WTRU for performing handover in a wireless communication system.
93. The WTRU of embodiment 92 comprising a transceiver for transmitting and receiving data to and from an eNode-B.
94. The WTRU of embodiment 93 comprising a measurement unit for performing measurements.
95. The WTRU as in any one of embodiments 93-94, comprising a controller for performing handover from a source eNode-B to a target eNode-B in accordance with a handover command received from the source eNode-B, the handover command including at least one of reconfiguration information, information regarding timing adjustment, relative timing difference between the source eNode-B and the target eNode-B; information regarding an initial radio resource scheduling procedure at the target eNode-B, and measurement information for the target eNode-B.
96. The WTRU of embodiment 95 wherein the reconfiguration information is for at least one of an RRC layer, an RLC layer, a MAC layer and a physical layer.
97. The WTRU as in any one of embodiments 95-96, wherein the controller controls the transceiver such that data is transmitted and received to and from the source eNode-B after the WTRU receives the handover command.
98. The WTRU of embodiment 97 wherein the data transmitted is an incomplete SDU.
99. The WTRU as in any one of embodiments 95-96, wherein the controller controls the transceiver such that data transmission to the source eNode-B stops as soon as the WTRU receives the handover command.
100. The WTRU as in any one of embodiments 95-99, wherein the controller is configured to perform timing adjustment with the target eNode-B.
101. The WTRU of embodiment 100, wherein the controller autonomously performs the timing adjustment based on relative timing difference between the source eNode-B and the target eNode-B.
102. The WTRU of embodiment 100, wherein the controller uses a RACH access procedure for the timing adjustment.
103. The WTRU of embodiment 102, wherein a plurality of RACH preamble signatures with different orthogonality and different priority are used, and among the plurality of RACH preamble signatures, a RACH preamble signature with higher orthogonality, higher priority and higher power is used for handover purpose.
104. The WTRU of embodiment 103, wherein a particular RACH preamble signature is reserved for the handover purpose.
105. The WTRU of embodiment 104, wherein the reserved RACH preamble signature is indicated in the handover command.
106. The WTRU as in any one of embodiments 95-105, wherein the controller sends a resource assignment request to the target eNode-B for scheduling an uplink resource.
107. The WTRU of embodiment 106, wherein the resource assignment request is sent via a RACH.
108. The WTRU as in any one of embodiments 95-107, wherein the controller performs a cell reselection procedure when the handover command is not successfully received.
109. The WTRU of embodiment 108, wherein the controller first tries to access an originally connected cell in the source eNode-B.
110. The WTRU of embodiment 109, wherein the controller tries to access another cell in the source eNode-B if the WTRU fails to access the originally connected cell.
111. The WTRU of embodiment 110, wherein the WTRU tries to access another cell not included in the source eNode-B if the WTRU fails to access said another cell in the source eNode-B.
112. The WTRU as in any one of embodiments 108-111, wherein the controller sends a source eNode-B ID to the target eNode-B during cell reselection.
113. A method for performing handover in a wireless communication system, the method comprising:
   a wireless transmit/receive unit (WTRU) and a source evolved Node-B (eNode-B) performing measurements;
   the source eNode-B making a handover decision based on the measurements;
   the source eNode-B sending a handover request to a target eNode-B;
   the target eNode-B sending a handover response to the source eNode-B indicating that a handover should commence; and
   the source eNode-B sending a handover command to the WTRU, the handover command including at least one of reconfiguration information, information regarding timing adjustment, relative timing difference between the source eNode-B and the target eNode-B; information regarding an initial radio resource scheduling procedure at the target eNode-B, and measurement information for the target eNode-B.
114. The method of embodiment 113 wherein the reconfiguration information is for at least one of a radio resource control (RRC) layer, a radio link control (RLC) layer, a medium access control (MAC) layer and a physical layer.
115. The method of embodiment 113 wherein the handover command indicates that the target eNode-B schedules resource for the WTRU based on a random access channel (RACH) access procedure.
116. The method of embodiment 113 wherein the handover command indicates that the target eNode-B schedules resource for the WTRU without receiving an explicit resource assignment request from the WTRU.
117. The method of embodiment 113 further comprising:
   the source eNode-B forwarding user data to the target eNode-B.
118. The method of embodiment 117 wherein the forwarding of the user data is performed in a service dependent and implementation specific way.
119. The method of embodiment 113 wherein the WTRU and the source eNode-B continue to transmit and receive data after the WTRU receives the handover command.
120. The method of embodiment 119 wherein the WTRU and the source eNode-B continue to transmit and receive the data until a handover time that is signaled via the handover command.
121. The method of embodiment 119 wherein the data transmitted is an incomplete service data unit (SDU).
122. The method of embodiment 121 wherein the source eNode-B sends a radio link control (RLC) message to the WTRU including a sequence number (SN) to indicate a successfully received SDU and an unsuccessfully received SDU.
123. The method of embodiment 122 wherein the SN is a packet data convergence protocol (PDCP) SN or a common SN.
124. The method of embodiment 113 wherein the source eNode-B stops transmission of data to the WTRU as soon as the source eNode-B sends the handover command to the WTRU, and the WTRU stops transmission of data to the source eNode-B as soon as the WTRU receives the handover command.
125. The method of embodiment 113 wherein the source eNode-B continues transmission of data until the WTRU switches to the target eNode-B.
126. The method of embodiment 113 further comprising:
   the WTRU performing timing adjustment with the target eNode-B.
127. The method of embodiment 126 wherein the WTRU autonomously performs the timing adjustment based on relative timing difference between the source eNode-B and the target eNode-B.
128. The method of embodiment 127 wherein the relative timing difference information is included in the handover command.
129. The method of embodiment 126 wherein the WTRU uses a random access channel (RACH) access procedure for the timing adjustment.
130. The method of embodiment 129 wherein a plurality of RACH preamble signatures with different orthogonality and different priority are used, and among the plurality of RACH preamble signatures, a RACH preamble signature with higher orthogonality, higher priority and higher power is used for handover purpose.
131. The method of embodiment 130 wherein a particular RACH preamble signature is reserved for the handover purpose.
132. The method of embodiment 131 wherein the reserved RACH preamble signature is indicated in the handover command.
133. The method of embodiment 126 further comprising:
   the target eNode-B assigning an uplink resource for transmission of a handover complete message for the WTRU.
134. The method of embodiment 133 wherein the target eNode-B schedules the uplink resource based on a resource assignment request from the WTRU.
135. The method of embodiment 134 wherein the resource assignment request is sent via a random access channel (RACH).
136. The method of embodiment 133 wherein the target eNode-B schedules the uplink resource without receiving a request from the WTRU.
137. The method of embodiment 133 further comprising:
   the WTRU resetting radio link control (RLC) and hybrid automatic repeat request (HARQ) after receiving the uplink resource from the target eNode-B.
138. The method of embodiment 113 further comprising:
   the WTRU resetting radio link control (RLC) and hybrid automatic repeat request (HARQ) after receiving the handover command.
139. The method of embodiment 138 further comprising:
   the WTRU sending a handover complete message to the target eNode-B, the handover complete message including an uplink packet data convergence protocol (PDCP) sequence number (SN) to be transmitted.
140. The method of embodiment 139 further comprising:
   the WTRU sending an RLC control message to the target eNode-B after the handover complete message to indicate a successfully transmitted service data unit (SDU) and an SDU gap.
141. The method of embodiment 139 further comprising:
   the target eNode-B sending uplink and downlink scheduling information for data transmission and radio resource control (RRC) message to the WTRU, the RRC message including at least one of radio access bearer (RAB) reconfiguration information, a starting PDCP SN start in a downlink, an RLC control message, and measurement related information.
142. The method of embodiment 113 further comprising:
   the WTRU performing a radio link (RL) failure procedure when the handover command is not successfully delivered.
143. The method of embodiment 113 wherein the source eNode-B maintains a timer to time out if a handover complete message is not received until a predetermined time after the handover command is not successfully delivered.
143. The method of embodiment 143 wherein the source eNode-B resets radio resource control (RRC) context, packet data convergence protocol (PDCP) context, radio link control (RLC) and hybrid automatic repeat request (HARQ) parameters related to the WTRU if the timer expires.
144. The method of embodiment 113 further comprising:
   the WTRU performing a cell reselection procedure when the handover command is not successfully delivered.
145. The method of embodiment 144 wherein the WTRU first tries to access an originally connected cell in the source eNode-B.
146. The method of embodiment 145 wherein the WTRU tries to access another cell in the source eNode-B if the WTRU fails to access the originally connected cell.
147. The method of embodiment 146 wherein the WTRU tries to access another cell not included in the source eNode-B if the WTRU fails to access said another cell in the source eNode-B.
148. The method of embodiment 144 wherein the WTRU sends a source eNode-B identity (ID) to the target eNode-B during cell reselection.
149. A wireless communication system for performing handover, the system comprising:
   a wireless transmit/receive unit (WTRU) configured to perform measurement and send a measurement repot;
   a target evolved Node-B (eNode-B); and
   a source eNode-B configured make a handover decision based on the measurement report, send a handover request to the target eNode-B, and send a handover command to the WTRU after receiving a handover response from the target eNode-B indicating that a handover should commence,
   wherein the handover command includes at least one of reconfiguration information, information regarding timing adjustment, relative timing difference between the source eNode-B and the target eNode-B; information regarding an initial radio resource scheduling procedure at the target eNode-B, and measurement information for the target eNode-B.
150. The system of embodiment 149 wherein the reconfiguration information is for at least one of a radio resource control (RRC) layer, a radio link control (RLC) layer, a medium access control (MAC) layer and a physical layer.
151. The system of embodiment 149 wherein the handover command indicates that the target eNode-B schedules resource for the WTRU using a random access channel (RACH) access procedure.
152. The system of embodiment 149 wherein the handover command indicates that the target eNode-B schedules resource for the WTRU without receiving an explicit resource assignment request from the WTRU.
153. The system of embodiment 149 wherein the source eNode-B is configured to forward user data to the target eNode-B after sending the handover command to the WTRU.
154. The system of embodiment 153 wherein the forwarding of the user data is performed in a service dependent and implementation specific way.
155. The system of embodiment 149 wherein the WTRU and the source eNode-B continue to transmit and receive data after the WTRU receives the handover command.
156. The system of embodiment 155 wherein the WTRU and the source eNode-B continue to transmit and receive the data until a handover time that is signaled via the handover command.
157. The system of embodiment 155 wherein the data transmitted is an incomplete service data unit (SDU).
158. The system of embodiment 157 wherein the source eNode-B sends a radio link control (RLC) message to the WTRU including a sequence number (SN) to indicate a successfully received SDU and an unsuccessfully received SDU.
159. The system of embodiment 158 wherein the SN is a packet data convergence protocol (PDCP) SN or a common SN.
160. The system of embodiment 149 wherein the source eNode-B stops transmission of data to the WTRU as soon as the source eNode-B sends the handover command to the WTRU, and the WTRU stops transmission of data to the source eNode-B as soon as the WTRU receives the handover command.
161. The system of embodiment 149 wherein the source eNode-B continues transmission of data until the WTRU switches to the target eNode-B.
162. The system of embodiment 149 wherein the WTRU is configured to perform timing adjustment with the target eNode-B.
163. The system of embodiment 162 wherein the WTRU is configured to autonomously perform the timing adjustment based on relative timing difference between the source eNode-B and the target eNode-B.
164. The system of embodiment 163 wherein the relative timing difference information is included in the handover command.
165. The system of embodiment 162 wherein the WTRU is configured to use a random access channel (RACH) access procedure for the timing adjustment.
166. The system of embodiment 165 wherein plurality of RACH preamble signatures with different orthogonality and different priority are used, and among the plurality of RACH preamble signatures, a RACH preamble signature with higher orthogonality, higher priority and higher power is used for handover purpose.
167. The system of embodiment 166 wherein a particular RACH preamble signature is reserved for the handover purpose.
168. The system of embodiment 166 wherein the reserved RACH preamble signature is indicated in the handover command.
169. The system of embodiment 162 wherein the target eNode-B is configured to assign an uplink resource for transmission of a handover complete message for the WTRU.
170. The system of embodiment 169 wherein the target eNode-B is configured to schedule the uplink resource based on a resource assignment request from the WTRU.
171. The system of embodiment 170 wherein the resource assignment request is sent via a random access channel (RACH).
172. The system of embodiment 169 wherein the target eNode-B is configured to schedule the uplink resource without receiving a request from the WTRU.
173. The system of embodiment 169 wherein the WTRU is configured to reset radio link control (RLC) and hybrid automatic repeat request (HARQ) after receiving the uplink resource from the target eNode-B.
174. The system of embodiment 149 wherein the WTRU is configured to reset radio link control (RLC) and hybrid automatic repeat request (HARQ) after receiving the handover command.
175. The system of embodiment 174 wherein the WTRU is configured to send a handover complete message to the target eNode-B, the handover complete message including an uplink packet data convergence protocol (PDCP) sequence number (SN) to be transmitted.
176. The system of embodiment 175 wherein the WTRU is configured to send an RLC control message to the target eNode-B after the handover complete message to indicate a successfully transmitted service data unit (SDU) and an SDU gap.
177. The system of embodiment 175 wherein the target eNode-B is configured to send uplink and downlink scheduling information for data transmission and radio resource control (RRC) message to the WTRU, the RRC message including at least one of radio access bearer (RAB) reconfiguration information, a starting PDCP SN start in a downlink, an RLC control message, and measurement related information.
178. The system of embodiment 149 wherein the WTRU is configured to perform a radio link (RL) failure procedure when the handover command is not successfully delivered.
179. The system of embodiment 149 wherein the source eNode-B includes a timer to time out if a handover complete message is not received until a predetermined time after the handover command is not successfully delivered.
180. The system of embodiment 179 wherein the source eNode-B resets radio resource control (RRC) context, packet data convergence protocol (PDCP) context, radio link control (RLC) and hybrid automatic repeat request (HARQ) parameters related to the WTRU if the timer expires.
181. The system of embodiment 149 wherein the WTRU is configured to perform a cell reselection procedure when the handover command is not successfully delivered.
182. The system of embodiment 181 wherein the WTRU first tries to access an originally connected cell in the source eNode-B.
183. The system of embodiment 182 wherein the WTRU tries to access another cell in the source eNode-B if the WTRU fails to access the originally connected cell.
184. The system of embodiment 183 wherein the WTRU tries to access another cell not included in the source eNode-B if the WTRU fails to access said another cell in the source eNode-B.
185. The system of embodiment 181 wherein the WTRU is configured to send a source eNode-B identity (ID) to the target eNode-B during cell reselection.
186. An evolved Node-B (eNode-B) for performing handover in a wireless communication system, the eNode-B comprising:
   a transceiver for transmitting and receiving data to and from a wireless transmit/receive unit (WTRU);
   a measurement unit for performing measurements on a channel for the WTRU; and
   a handover controller configured to make a handover decision based on the measurements and send a handover command to the WTRU, the handover command including at least one of reconfiguration information, information regarding timing adjustment, relative timing difference between a source eNode-B and a target eNode-B; information regarding an initial radio resource scheduling procedure at the target eNode-B, and measurement information for the target eNode-B.
187. The eNode-B of embodiment 186 wherein the reconfiguration information is for at least one of a radio resource control (RRC) layer, a radio link control (RLC) layer, a medium access control (MAC) layer and a physical layer.
188. The eNode-B of embodiment 186 wherein the handover controller controls the transceiver such that data is transmitted and received to and from the WTRU after the WTRU receives the handover command.
189. The eNode-B of embodiment 186 wherein the handover controller controls the transceiver such that data is transmitted and received to and from the WTRU until a handover time that is signaled via the handover command.
190. The eNode-B of embodiment 189 wherein the data transmitted is an incomplete service data unit (SDU).
191. The eNode-B of embodiment 190 wherein the handover controller controls the transceiver such that data transmission is stopped as soon as the handover command is sent to the WTRU.
192. A wireless transmit/receive unit (WTRU) for performing handover in a wireless communication system, the WTRU comprising:
   a transceiver for transmitting and receiving data to and from an evolved Node-B (eNode-B);
   a measurement unit for performing measurements; and
   a controller for performing handover from a source eNode-B to a target eNode-B in accordance with a handover command received from the source eNode-B, the handover command including at least one of reconfiguration information, information regarding timing adjustment, relative timing difference between the source eNode-B and the target eNode-B; information regarding an initial radio resource scheduling procedure at the target eNode-B, and measurement information for the target eNode-B.
193. The WTRU of embodiment 192 wherein the reconfiguration information is for at least one of a radio resource control (RRC) layer, a radio link control (RLC) layer, a medium access control (MAC) layer and a physical layer.
194. The WTRU of embodiment 192 wherein the controller controls the transceiver such that data is transmitted and received to and from the source eNode-B after the WTRU receives the handover command.
195. The WTRU of embodiment 194 wherein the data transmitted is an incomplete service data unit (SDU).
196. The WTRU of embodiment 192 wherein the controller controls the transceiver such that data transmission to the source eNode-B stops as soon as the WTRU receives the handover command.
197. The WTRU of embodiment 192 wherein the controller is configured to perform timing adjustment with the target eNode-B.
198. The WTRU of embodiment 197 wherein the controller autonomously performs the timing adjustment based on relative timing difference between the source eNode-B and the target eNode-B.
199. The WTRU of embodiment 197 wherein the controller uses a random access channel (RACH) access procedure for the timing adjustment.
200. The WTRU of embodiment 199 wherein a plurality of RACH preamble signatures with different orthogonality and different priority are used, and among the plurality of RACH preamble signatures, a RACH preamble signature with higher orthogonality, higher priority and higher power is used for handover purpose.
201. The WTRU of embodiment 200 wherein a particular RACH preamble signature is reserved for the handover purpose.
202. The WTRU of embodiment 201 wherein the reserved RACH preamble signature is indicated in the handover command.
203. The WTRU of embodiment 192 wherein the controller sends a resource assignment request to the target eNode-B for scheduling an uplink resource.
204. The WTRU of embodiment 203 wherein the resource assignment request is sent via a random access channel (RACH).
205. The WTRU of embodiment 192 wherein the controller performs a cell reselection procedure when the handover command is not successfully received.
206. The WTRU of embodiment 205 wherein the controller first tries to access an originally connected cell in the source eNode-B.
207. The WTRU of embodiment 206 wherein the controller tries to access another cell in the source eNode-B if the WTRU fails to access the originally connected cell.
208. The WTRU of embodiment 207 wherein the WTRU tries to access another cell not included in the source eNode-B if the WTRU fails to access said another cell in the source eNode-B.
209. The WTRU of embodiment 205 wherein the controller sends a source eNode-B identity (ID) to the target eNode-B during cell reselection.

Although the features and elements of the present invention are described in the preferred embodiments in particular combinations, each feature or element can be used alone without the other features and elements of the preferred embodiments or in various combinations with or without other features and elements of the present invention. The methods or flow charts provided in the present invention may be implemented in a computer program, software, or firmware tangibly embodied in a computer-readable storage medium for execution by a general purpose computer or a processor. Examples of computer-readable storage mediums include a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs).

Suitable processors include, by way of example, a general purpose processor, a special purpose processor, a conventional processor, a digital signal processor (DSP), a plurality of microprocessors, one or more microprocessors in association with a DSP core, a controller, a microcontroller, Application Specific Integrated Circuits (ASICs), Field Programmable Gate Arrays (FPGAs) circuits, any other type of integrated circuit (IC), and/or a state machine.

A processor in association with software may be used to implement a radio frequency transceiver for use in a wireless transmit receive unit (WTRU), user equipment (UE), terminal, base station, radio network controller (RNC), or any host computer. The WTRU may be used in conjunction with modules, implemented in hardware and/or software, such as a camera, a video camera module, a videophone, a speakerphone, a vibration device, a speaker, a microphone, a television transceiver, a hands free headset, a keyboard, a Bluetooth® module, a frequency modulated (FM) radio unit, a liquid crystal display (LCD) display unit, an organic light-emitting diode (OLED) display unit, a digital music player, a media player, a video game player module, an Internet browser, and/or any wireless local area network (WLAN) module.

## Claims

1. A method implemented by a wireless transmit/receive unit, WTRU, the method comprising:
the WTRU sending a measurement report to a source Node B;
the WTRU receiving a handover command from the source Node B instructing the WTRU to handover to a target Node B, the handover command including radio bearer configuration information regarding a radio bearer associated with the WTRU;
the WTRU performing the handover to the target Node B by at least implementing the radio bearer configuration information; and
the WTRU transmitting a handover complete message to the source Node B.

2. The method of claim 1, wherein the radio bearer configuration information includes packet data convergence protocol (PDCP) information.

3. The method of claim 2, wherein the PDCP information indicates a PDCP sequence number.

4. The method of claim 1, wherein the handover command further includes measurement configuration information indicating a measurement to be performed by the WTRU.

5. The method of claim 1, wherein the WTRU performing the handover to the target Node B comprises the WTRU resetting radio link control, RLC, and hybrid automatic repeat request, HARQ.

6. The method of claim 1, wherein the handover command indicates whether or not the WTRU should use a random access channel, RACH, procedure for timing adjustment in order to obtain uplink synchronization with the target Node B.

7. The method of claim 6, wherein the handover command indicates that the WTRU should perform timing adjustment using the RACH procedure, and the handover command includes an indication of a dedicated RACH preamble to be used for the RACH procedure.

8. A wireless transmit/receive unit, WTRU, comprising:
a processor configured to:
send a measurement report to a source Node B;
receive a handover command from the source Node B instructing the WTRU to handover to a target Node B, the handover command including radio bearer configuration information regarding a radio bearer associated with the WTRU;
perform the handover to the target Node B by at least implementing the radio bearer configuration information; and
transmit a handover complete message to the source Node B.

9. The WTRU of claim 8, wherein the radio bearer configuration information includes packet data convergence protocol (PDCP) information.

10. The WTRU of claim 9, wherein the PDCP information indicates a PDCP sequence number.

11. The WTRU of claim 8, wherein the handover command further includes measurement configuration information indicating a measurement to be performed by the WTRU.

12. The WTRU of claim 8, wherein the processor being configured to perform the handover to the target Node B comprises the processor being configured to reset radio link control, RLC, and hybrid automatic repeat request, HARQ.

13. The WTRU of claim 8, wherein the handover command indicates whether or not the WTRU should use a random access channel, RACH, procedure for timing adjustment in order to obtain uplink synchronization with the target Node B.

14. The WTRU of claim 13, wherein the handover command indicates that the WTRU should perform timing adjustment using the RACH procedure, and the handover command includes an indication of a dedicated RACH preamble to be used for the RACH procedure.

15. The WTRU of claim 8, wherein the processor being configured to perform the handover to the target Node B further comprises the processor being configured to perform a prioritized random access channel, RACH, procedure to the target Node B.
